# EUROPÄISCHE PATENTSCHRIFT

(11) **EP 1 531 544 B1**
(45) Veröffentlichungstag und Bekanntmachung des Hinweises auf die Patenterteilung: **11.08.2010**
(21) Anmeldenummer: 04102182.5
(22) Anmeldetag: 18.05.2004
(51) Int. Cl.: H02P 7/00, H02P 7/29

(54) **Verfahren zum Betreiben eines durch Pulsweitenmodulation gesteuerten Elektromotors**
Method to operate a by PWM controlled electromotor
Méthode pour utiliser un moteur électrique controlé en PWM

(30) Priorität: 11.11.2003 DE 10352509
(43) Veröffentlichungstag der Anmeldung: 18.05.2005
(73) Patentinhaber: ROBERT BOSCH GMBH, 70442 Stuttgart (DE)
(72) Erfinder: Tobias, Ralph, 76534, Baden-Baden (DE); Sutter, Joerg, 76571, Gaggenau (DE); Frey, Heiko, 76476, Bischweier (DE)

(56) Entgegenhaltungen:
- EP-A- 0 023 623
- EP-A- 0 808 010
- DE-A1- 10 112 820
- DE-A1- 19 621 500

## Beschreibung

### Stand der Technik

Die Erfindung geht aus von einem Verfahren zum Betreiben eines ein- oder mehrsträngigen, elektronisch kommutierbaren, durch Pulsweitenmodulation gesteuerten Elektromotors an einem Gleichspannungsnetz nach der Gattung des Anspruchs 1. Ein derartiges Verfahren ist aus der DE 29 30 863 A und der EP 0 023 623 A1 grundsätzlich bekannt, wobei der über einen Wechselrichter in Vollbrückenschaltung gesteuerte Laststrom aus den Einzelströmen in den beiden Brückenzweigen mittels getrennter Shunts ermittelt wird. Derartige Schaltungsanordnungen arbeiten grundsätzlich zufrieden stellend, weil der zu messende Strom jeweils über beide Shunts fließt und die Freilaufphase mit einschließt, so dass keine Schwierigkeiten mit der Strommessung im Ansteuerbereich mit kleinen Pulsweiten entstehen. Shunts sind grundsätzlich im Vergleich zu anderen Möglichkeiten der Stromerfassung eine vorteilhafte, einfache Lösung, dennoch handelt es sich bei diesen Bauelementen um Präzisionsbauteile, welche die Kosten der Gesamtschaltungsanordnung beeinflussen, insbesondere wegen der aufwändigen nachgeschalteten Signalaufbereitung.

Des weiteren ist ein Verfahren aus der EP0808010 A2 bekannt, wobei der Motorstrom bei Verwendung einer H-Vollbrückenschaltung mit nur einem Shunt erfasst wird.

Die Strommessung mit Hilfe von Shunt erfolgt entsprechend DE 101 12 820 A1 zweckmäßigerweise derart, dass die am Shunt abfallende Spannung verstärkt und dem Eingang eines Analog-Digital-Wandlers (AD-Wandlers) zugeführt wird, dessen Ausgangssignal wiederum der Steuereinheit zugeführt wird. Die AD-Wandlung führt jedoch nur dann zu einem korrekten Ergebnis, wenn die zu messende Spannung am Shunt für einen zur Abtastung ausreichenden Zeitraum am Eingang des AD-Wandlers anliegt, das heißt, dass zum Abtastzeitpunkt der zu messende Strom den Shunt noch durchfließt und die Messspannung dort anliegt. Dies ist bei kurzen Pulsweiten bei der Verwendung je eines Shunts in jedem Zweig eines in H-Schaltung aufgebauten Wechselrichters zwar gewährleistet, weil in diesem Fall auch in der Freilaufphase ein nahezu gleich bleibender Strom durch die Shunts der Brückenzweige fließt. Bei der Einsparung eines Shunts zwischen dem Ausgang des Wechselrichters und Masse schließt sich jedoch der Freilaufkreis des Strangstromes direkt über die Schalter des Wechselrichters, sodass bei kleinen Pulsweiten am Shunt die Messspannung nur kurze Zeit zur Verfügung steht.

### Aufgabenstellung

Der Erfindung liegt die Aufgabe zugrunde, ein Verfahren aufzuzeigen, welches es ermöglicht, auch bei kleinen Pulsweiten bei Verwendung einer H-Wechselrichterbrücke den Strom in einem Strang des Motors mit nur einem Shunt sicher und korrekt zu erfassen. Diese Aufgabe wird durch das Verfahren im Anspruch 1 gelöst.

Als vorteilhaft hat es sich erwiesen, wenn der Mindestwert der Pulsweite der vom Wechselrichter gelieferten Spannung für die Erregerwicklung, beziehungsweise die Pulsweite des durch den Shunt fließenden Stromes, einen Wert von mindestens 3%, vorzugsweise einen Wert von ca. 20 % der vollen Pulsweite nicht unterschreitet. Bis zu diesen Werten ist sichergestellt, dass in dem dem Shunt nachgeordneten AD-Wandler im Messzeitpunkt der korrekte Wert des Messstromes erfasst wird.

Die Pulsweitenmodulation zur Erzeugung der resultierenden Strangspannung U an der Erregerwicklung durch die beiden mit dem positiven Pol des Gleichspannungsnetzes verbundenen Schalter erfolgt zweckmäßigerweise so, dass das Takten des in Gegenrichtung arbeitenden elektronischen Schalters zeitlich versetzt zur Taktung des speisenden Schalters der Wechselrichterschaltung erfolgt. Diese Art der Schaltung hat den Vorteil, dass bei mehrsträngigen Motoranordnungen die Zwischenkreiskapazität entlastet wird, da die Stromentnahme auf mehrere Bestromungsblöcke verteilt und dadurch der Effektivstrom der Zwischenkreiskapazität verringert wird.

Vorteilhafterweise erfolgt hierbei die Taktung des in Gegenrichtung arbeitenden elektronischen Schalters um eine halbe Periode der Pulsfrequenz versetzt zur Taktung des speisenden elektronischen Schalters, weil sich so bei mehrsträngigen Maschinen im Mittel über alle Pulsweiten der kleinste Effektivstrom in der Zwischenkreiskapazität einstellt.

Bei der Durchführung des erfindungsgemäßen Verfahrens hat es sich weiterhin als vorteilhaft erwiesen, wenn der Wechselrichter mit aktiven Freilauf betrieben wird, wobei der jeweils im gleichen Zweig der Wechselrichterschaltung liegende Freilaufschalter in den Stromflusspausen des speisenden elektronischen Schalters leitend geschaltet wird. Hierdurch kann der Widerstand im Freilaufkreis in an sich bekannter Weise weiter verringert werden.

Die Ansteuerung der einzelnen Schalter des Wechselrichters erfolgt vorteilhafterweise derart, dass der speisende elektronische Schalter und der in Gegenrichtung arbeitende elektronische Schalter durch getrennte Zeitgeber der Steuereinheit mit unterschiedlichen Zeitbasen gesteuert werden, wobei der jeweils speisende Schalter und der im gleichen Zweig des Wechselrichters liegende Schalter jeweils von der gleichen Zeitbasis jedoch von invertierenden Ausgängen der Treiberschaltung gesteuert werden.

Die Abtastung der positiven und negativen Halbwelle des Messstromes am Shunt erfolgt erfindungsgemäß zu verschiedenen Zeitpunkten, vorzugsweise jeweils in Taktmitte, entsprechend dem zeitlichen Versatz der Taktung des speisenden und des im Gegentakt geschalteten elektronischen Schalters, wobei dann der weiter zu verarbeitende korrekte Messwert entsprechend dem Vorzeichen des Sollwertes des Strangstromes bestimmt werden kann.

### Ausführungsbeispiel

Weitere Einzelheiten und vorteilhafte Ausgestaltungen der Erfindung ergeben sich aus der Beschreibung des Ausführungsbeispieles.

Die Abbildungen zeigen in
**Fig.1** eine Schaltungsanordnung zum Betreiben eines durch Pulsweitenmodulation gesteuerten Elektromotors, in
**Fig. 2** den Verlauf der Steuerimpulse für die Transistoren des Wechselrichters sowie den Verlauf des Strangstromes und des Messstromes am Shunt, jeweils für einen kurzen Zeitabschnitt in der positiven Halbwelle, in
**Fig. 3** den Verlauf der Pulsweite an den einzelnen elektronischen Schaltern T1-T4, in
**Fig. 4** den Verlauf der resultierenden Strangspannung und in
**Fig. 5** den Verlauf der Pulsweite des Messstromes am Shunt entsprechend der erfindungsgemäßen Pulsweitenmodulation.

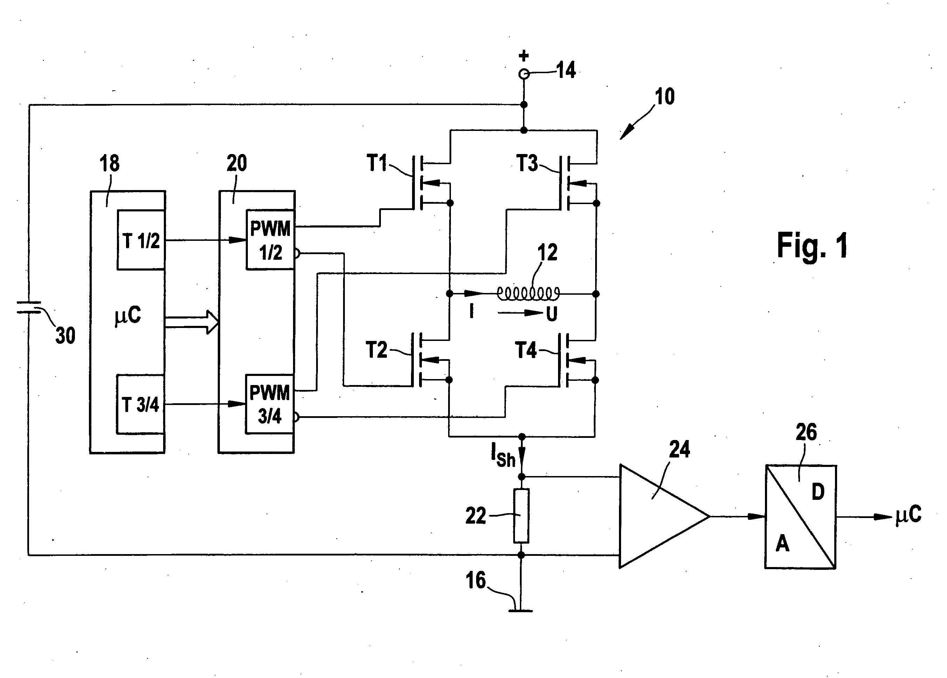

In Figur 1 ist mit 10 ein Wechselrichter für die pulsweitenmodulierte Stromversorgung der Strangwicklung 12 eines einsträngigen, elektronisch kommutierbaren Elektromotors aus einem Gleichspannungsnetz dargestellt, dessen Pluspol mit 14 und dessen Minuspol mit 16 bezeichnet sind. Eine derartige Vollbrücken- Wechselrichterschaltung wird üblicherweise als H-Schaltung bezeichnet. Anstelle der dargestellten einsträngigen Ausführung tritt jedoch für viele Anwendungen eine dreisträngige Ausführung des Elektromotors, dessen Strangwicklungen 12 dann durch zwei weitere, gleichartig aufgebaute und in gleicher Weise angesteuerte Wechselrichter 10 betrieben werden.

Die Steuerung des Wechselrichters 10 erfolgt durch einen Mikrocontroller 18 über einen intelligenten Brückentreiber 20. Der Mikrocontroller 18 weist dabei zwei getrennte, eine Pulsweitenmodulation erzeugende Zeitgeber T1/2 und T3/4 auf, durch welche die im Wechselrichter 10 als Schalter verwendeten MOSFET- Transistoren T1-T4 paarweise über getrennte Ausgangsglieder PWM 1/2 und PWM 3/4 gesteuert werden. Die Ausgangsglieder PWM 1/2 und PWM 3/4 weisen jeweils einen direkten und einen invertierenden Ausgang auf, wobei die direkten Ausgänge mit den Steuerelektroden der Schalter T1 und T3 und die invertierenden Ausgänge mit den Steuerelektroden der Schalter T2 und T4 verbunden sind. Die sonstige Beschaltung und Stromversorgung des Mikrocontrollers 18 und des Brückentreibers 20 erfolgen in herkömmlicher Weise, sodass auf Ausführungen hierzu in der folgenden Anmeldung verzichtet werden kann.

Die Messung des Strangstromes I erfolgt erfindungsgemäß durch einen einzigen Shunt 22 (gegebenenfalls je Strang), welcher masseseitig zwischen den Wechselrichter 10 und den Minuspol 16 des Gleichspannungsnetzes geschaltet ist. Mit den beiden Anschlüssen des Shunts 22 sind die Eingänge eines Verstärkers 24 verbunden, dessen Ausgang am Analogeingang eines AD-Wandlers 26 liegt. Der Ausgang des AD-Wandlers 26 ist mit einem Eingang des Mikrocontrollers 18 verbindbar zur Überwachung des jeweils aktuellen Wertes des Strangstromes I.

Die Schaltungsanordnung arbeitet folgendermaßen:

Der Mikrocontroller 18 liefert entsprechend den um 180° verschobenen Zeitbasen T1/2 und T3/4 über die Ausgänge PWM 1/2 und PWM 3/4 des Brückentreibers 20 die Steuersignale für die Transistoren T1-T4 des Wechselrichters 10. Hierbei erfolgt die Pulsweitenmodulation der positiven Halbwelle der Strangspannung durch den Transistor T1, die Pulsweitenmodulation der negativen Halbwelle der Strangspannung durch den Transistor T3. Der Strangstrom I über die Strangwicklung 12 fließt während der positiven Halbwelle über den Transistor T4 und den Shunt 22 zum Minuspol 16 des Gleichspannungsnetzes.

Der Transistor T2 wird während der positiven Halbwelle durch das Ausgangsglied PWM 1/2 des Brückentreibers 20 invertiert, sodass der Transistor T2 während der Stromflusspausen des Transistors T1 leitend ist und zusammen mit dem Transistor T4 einen so genannten aktiven Freilaufkreis für den Strangstrom I bildet. Der Strangstrom fließt also in der Freilaufphase nicht über den Shunt 22, welcher, im Gegensatz zu herkömmlichen Anordnungen mit je einem Shunt in jedem Brückenzweig einer Vollbrückenschaltung, nicht in den Freilaufstromkreis einbezogen ist.

Bei dem erfindungsgemäßen Verfahren fließt durch den Shunt 22 ein Shuntstrom I_{Sh} in gleicher Richtung nur während der Pulsdauer an den Transistoren T1 und T3. Diese Stromflussdauer ist jedoch bei kleinen Pulsweiten zu gering für eine korrekte Strommessung im AD- Wandler 26, da zum Abtastzeitpunkt (Samplingzeitpunkt) bei kleinen Pulsweiten die zu messende Spannung auf Grund des Einschwingverhaltens der Signalaufbereitung im Verstärker noch nicht ihren endgültigen Wert erreicht hat, so dass es zwangsläufig zu Fehlmessungen kommt. Als Untergrenze für den Abtastzeitpunkt, das heißt als Mindestdauer der von den Transistoren T1 und T3 gelieferten Speisespannung U für die Erregerwicklung 12, kann bei einer üblichen Taktfrequenz für die Pulsweitenmodulation von 20 kHz eine Mindestpulsweite von ca. 3 % der vollen Pulsweite gelten. Bei oder oberhalb einer Mindestpulsweite von beispielsweise 20 % der vollen Pulsweite sind mit Sicherheit keine Messschwierigkeiten im AD-Wandler 26 zum Abtastzeitpunkt mehr zu befürchten. Hierbei wird die an der Erregerwicklung 12 anliegende Spannung U und der Strangstrom I entsprechend der Einschaltdauer des entgegenwirkenden Schalters soweit verringert, dass die vorgegebene Erregung des Motors eingehalten wird. Bei einer Taktfrequenz der Pulsweitenmodulation von 20 kHz entspricht eine Pulsweite von 20% der vollen Pulsweite einer Pulsdauer von 10 µs bei einer Periodendauer von 50 µs.

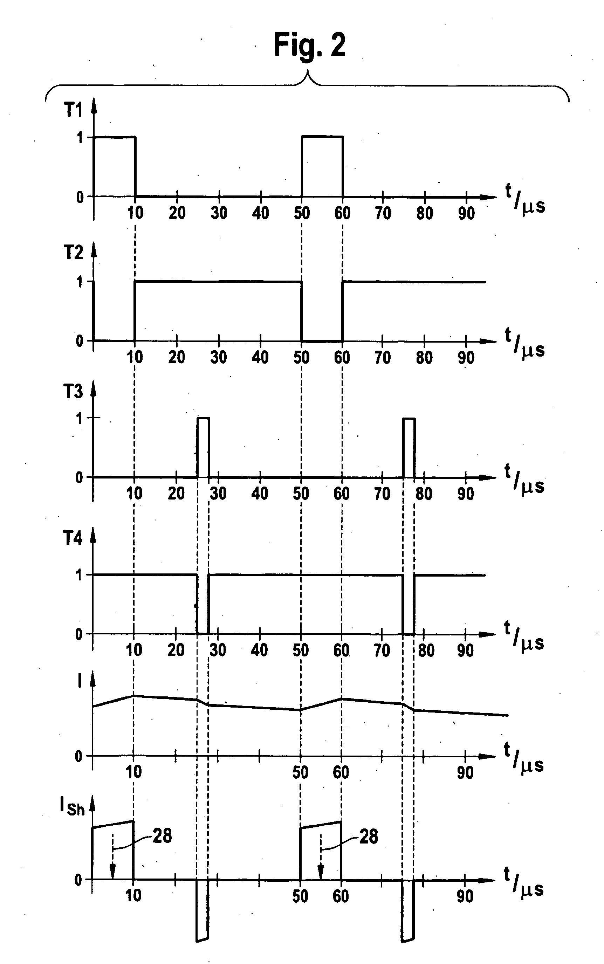

Die Taktung der Schalter ist in Fig.2 für einen kurzen Zeitausschnitt dargestellt. Die Diagramme für die Pulsweitenmodulation der Transistoren T3 und T4 gelten für eine Sollpulsweite von 15 % bei der angenommenen Taktfrequenz von 20 kHz, was einer Pulsdauer von 7,5 µs entspricht. Hierbei wird der Transistor T3 durch den Zeitgeber T3/4, in seiner Zeitbasis um 180° elektrisch entsprechend einer halben Pulsweite versetzt, mit einer Pulsdauer von 2,5 µs bestromt, sodass sich an der Erregerwicklung die gegenläufigen Ströme über die Transistoren T1 und T3 überlagern und sich eine resultierende Strangspannung U einstellt, welche soweit reduziert ist, dass sie der Strangspannung bei der Sollpulsweite entspricht. Der Transistor T4, welcher bei herkömmlichem Betrieb eines derartigen Wechselrichters 10 während der vollen Periodendauer der Bestromung über den Transistor T1 leitend ist, wird während der Gegenbestromung der Erregerwicklung 12 über den Transistor T3 nicht leitend geschaltet, um einen Kurzschluss des über T3 fließenden Stromes gegen Masse zu verhindern.

Der Transistor T2 arbeitet im Wechsel zum Transistor T1 und ermöglicht einen aktiven Freilauf des Erregerstromes I während der Einschaltpausen des Transistors T1. Hierdurch wird gegenüber einem passiven Freilauf über die Inversdiode des Transistor T2 der Widerstand im Freilaufkreis und hierdurch die Verluste und die Erwärmung deutlich reduziert. Das Gleiche gilt für die Transistoren T3 und T4.

In Figur 2 sind der Verlauf des Stromes I über die Erregerwicklung 12 sowie des Stromes I_{Sh} über den Shunt 22 dargestellt, wobei der Abtastzeitpunkt im AD-Wandler 26 durch einen gestrichelt dargestellten Pfeil 28 im Diagramm des Shuntstromes angedeutet ist. Der Strangstrom I steigt von seinem Restwert nach dem vorausgegangenen Freilauf in der Pulspause des Transistor T1 mit dem Leitendwerden des Transistors T1 an und fällt dann während der nächsten Pulspause bis zum erneuten Leitendschalten des Transistors T1 in der Freilaufphase wieder langsam ab. Um die Hälfte der Pulsperiodendauer versetzt wird über den Transistor T3 der Strang gegenbestromt, beziehungsweise die Stromhöhe abgesenkt. Da die Stromrichtung aber noch positiv ist, fließt ein negativer Strom I_{Sh} über den Shunt. Dieser Vorgang wiederholt sich während der gesamten positiven Halbwelle mit unterschiedlichen Pulspausezeiten. In der nicht dargestellten negativen Halbwelle kehren sich die Vorzeichen der entsprechenden Ströme und Spannungen um, wobei die Mindest-Pulsweitenmodulation nun über den Transistor T3 erfolgt und das Gegenbestromen über den Transistor T1. Die Stromflussdauer des messbaren Shuntstromes entspricht dem für den Transistor T1 vorgegebenen Mindestwert von 10µs beim Ausführungsbeispiel.

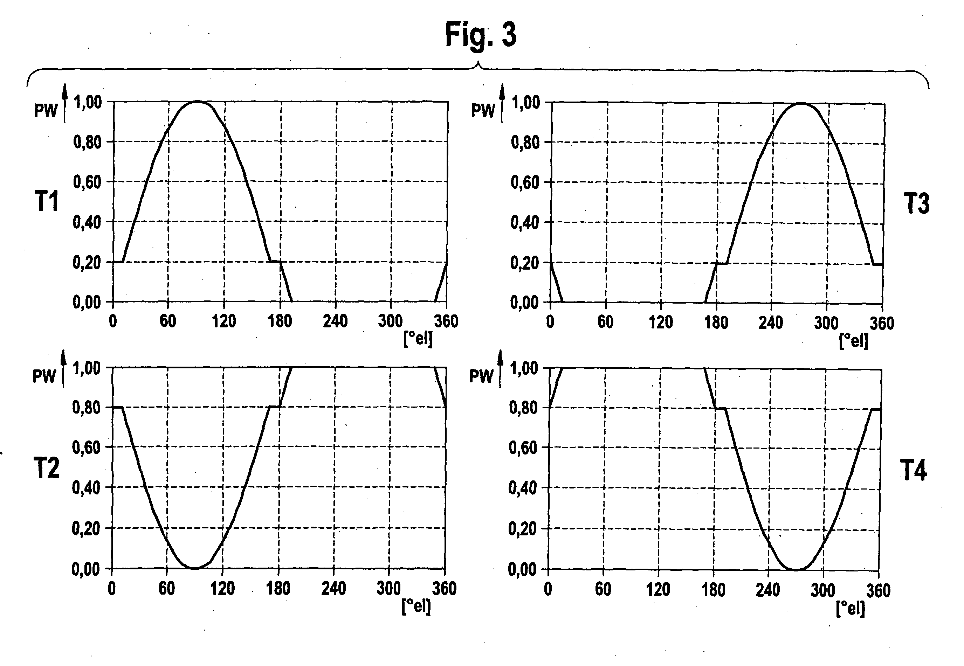

Figur 3 zeigt den Verlauf der Pulsweite an den einzelnen Transistoren T1-T4 für einen sinusförmigen Strangspannungsverlauf. Hierbei ist jeweils auf der Ordinate die Größe der Pulsweite als Bruchteil der vollen Pulsweite und auf der Abszisse die elektrische Gradzahl angegeben. Dabei ist wiederum eine Taktfrequenz von 20 kHz entsprechend einer Periodendauer von 50 µs zugrundegelegt, wobei die Pulsweite nicht unter einem Wert von 20 % absinken soll, um zum Abtastzeitpunkt (Samplingzeitpunkt) im AD-Wandler 26 ein korrektes Messergebnis zu gewährleisten. Die Pulsweite PW an den einzelnen Transistoren wird also am Anfang und am Ende jeder Halbwelle bei den im Gegentakt arbeitenden Transistoren T1 und T2 auf einem Wert von 20 %, beziehungsweise 80 % festgehalten, so lange, bis dieser Festwert der Pulsweite dem Sollwert entspricht. Während dieser Zeit wird an den Transistoren T3 und T4 durch die Einstellung entsprechend gegenläufiger Pulsweiten der Sollwert für die Bestromung der Erregerwicklung 12 sichergestellt. Aus der Darstellung kann man erkennen, dass zum Zeitpunkt Null des Pulsverlaufes der Transistor T1 bereits zu 20 % leitend geschaltet ist. Zur Kompensation wird zum gleichen Zeitpunkt der in Gegenrichtung wirkende Transistor T3 ebenfalls zu 20 % leitend geschaltet, und zwar mit abnehmender Tendenz derart, dass die Leitendphase des Transistors T3 in dem Augenblick zu Null wird, wo der Sollwert der Pulsweite des Transistors T1 der Wert von 20 % erreicht. Diese Ansteuerungsart wiederholt sich mit umgekehrten Vorzeichen in der negativen Halbwelle der Bestromung der Erregerwicklung 12, indem der Transistor T1 von einem Pulsweitenwert von 20 % auf den Wert Null zurückgeführt wird in dem Zeitpunkt, wo der Sollwert der Pulsweite des Transistors T3 den Wert von 20 % erreicht. Entsprechend spiegelbildlich erfolgt die Steuerung der Transistoren T2 und T4.

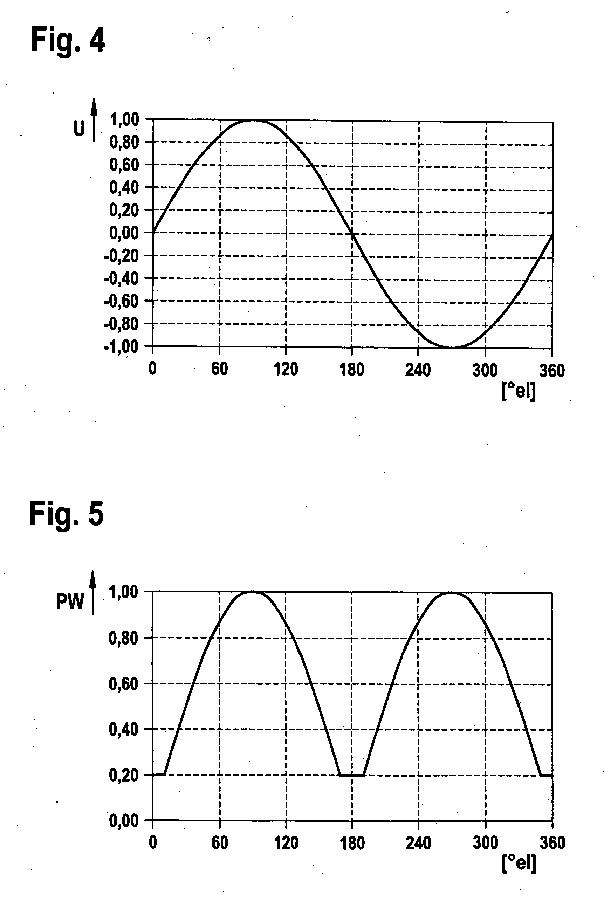

Figur 4 zeigt die resultierende Strangspannung an der Erregerwicklung 12. Diese verläuft sinusförmig und weist auf Grund der Gegenbestromung den jeweiligen Sollwert auf.

Entsprechendes gilt für die in Figur 5 dargestellte Pulsweite bei der Strommessung am Shunt 22. Der Shuntstrom I_{Sh} behält zur Sicherstellung des Messergebnisses im AD-Wandler 26 dauernd eine Mindestpulsweite von 20 % der vollen Pulsweite, die Größe des Messstromes ist jedoch auf Grund der jeweiligen Gegenbestromung im Bereich von Pulsweiten unterhalb von 20 % der vollen Pulsweite korrekt.

Mit dem erfindungsgemäßen Verfahren wird es möglich, bei einem durch eine H-Brücke geschalteten Motorstrang die Strangströme I mit nur einem Shunt korrekt zu messen und so die Kosten für einen verhältnismäßig teuren zusätzlichen Präzisionswiderstand und die Signalaufbereitung einzusparen. Die am Shunt 22 abfallende Messspannung wird verstärkt und in bekannter Weise an den Eingang eines AD-Wandlers 26 geführt. Bei der AD-Wandlung wird jedoch nur dann ein korrektes Messergebnis erzielt, wenn die zu messende Spannung für einen Mindest-Abtastzeitraum (Sample-Zeit) am Eingang des AD-Wandlers anliegt. Während nun bei bekannten Schaltungen je ein Shunt in jedem Zweig des Wechselrichters benötigt wird, um die Freilaufphase des in nahezu unveränderter Höhe über die Erregerwicklung 12 fließenden Stromes I für die Messung mit zu nutzen, kommt das erfindungsgemäße Verfahren mit nur einem Shunt bei der Messung aus. Durch die Festlegung einer Mindestpulsweite für den Erregerstrom I bei entsprechend verringerter Strangspannung U ist erfindungsgemäß die Strommessung in der Freilaufphase nicht mehr erforderlich und der Strom kann dennoch jederzeit korrekt erfasst werden. Kern des erfindungsgemäßen Verfahrens ist dabei, dass die Pulsweite durch die Steuereinrichtung 18, 20 an den für die Pulsweitenmodulation verantwortlichen Schaltern T1 und T3 auf einem Mindestwert festgehalten wird, welcher für die Abtastung im AD-Wandler 26 ausreicht, und dass eine Kompensation auf den korrekten Wert der Erregung des Motors durch eine Gegenbestromung erfolgt, derart, dass der Effektivwert der Spannung an der Erregerwicklung 12 gleich der Sollspannung ist. Durch die Kompensation der Mindest-Pulsweitenmodulation mit Hilfe der entgegengesetzten Modulation kann der Erregerstrom I mit einem einzigen Shunt und einem AD-Wandler korrekt gemessen werden und die Aussteuerbarkeit der effektiven Pulsweitenmodulation von 0 % bis 100 % bleibt erhalten. Außerdem treten keine Gleichtaktsprünge auf, welche das Messergebnis verfälschen könnten. Die Strommessung ist im gesamten Aussteuerbereich möglich.

## Patentansprüche

1. Verfahren zum Betreiben eines ein- oder mehrsträngigen, elektronisch kommutierbaren, durch Pulsweitenmodulation gesteuerten Elektromotors an einem Gleichspannungsnetz, mit einer Treiberstufe (20) für wenigstens einen in Vollbrückenschaltung aufgebauten Wechselrichter (10) zur Speisung einer Erregerwicklung (12) des Elektromotors und mit einer Shuntanordnung (22, 24, 26) zwischen dem Wechselrichter (10) und einem Masseanschluss (16) des Gleichspannungsnetzes zur Messung eines Strangstromes (I), wobei jeder Strang des Elektromotors zur Strommessung nur einen Shunt (22) aufweist, **dadurch gekennzeichnet, dass** eine am Shunt (22) abgreifbare Messspannung verstärkt und über einen Analog-Digital-Wandler (26) einer Steuereinheit (18, 20) zugeführt wird, wobei die Pulsweite durch die Steuereinrichtung (18, 20) an den für die Pulsweitenmodulation verantwortlichen Schaltern (T3, T1) auf einem Mindestwert gehalten wird, der für die Abtastung im Analog-Digital-Wandler (26) ausreicht und dass eine Kompensation auf den korrekten Wert der Erregung des Elektromotors durch eine Gegenbestromung der Erregerwicklung (12) derart erfolgt, dass der Effektivwert der Strangspannung (U) an der Erregerwicklung (12) gleich dem Sollwert der Strangspannung (U) ist.

2. Verfahren nach Anspruch 1, **dadurch gekennzeichnet, dass** der Mindestwert der Pulsweite der vom Wechselrichter (10) gelieferten Strangspannung (U) für die Erregerwicklung (12) so eingestellt wird, dass zum Abtastzeitpunkt am Analog-Digital-Wandler (26) der volle Wert der dem Messstrom (I_{Sh}) proportionalen Messspannung am Shunt (22) anliegt.

3. Verfahren nach Anspruch 2, **dadurch gekennzeichnet, dass** die Pulsweite der vom Wechselrichter (10) gelieferten Strangspannung (U) für die Erregerwicklung (12) bei einer Taktfrequenz der Pulsweitenmodulation von 20 kHz wenigstens 3%, vorzugsweise 20 %, der vollen Pulsweite beträgt.

4. Verfahren nach einem der vorhergehenden Ansprüche, **dadurch gekennzeichnet, dass** die Taktung des in Gegenrichtung speisenden elektronischen Schalters (T3) zeitlich versetzt zur Taktung des in elektrisch positiver Richtung speisenden Schalters (T1) der Wechselrichterschaltung (T1-T4) erfolgt.

5. Verfahren nach einem der vorhergehenden Ansprüche, **dadurch gekennzeichnet, dass** die Taktung des in Gegenrichtung speisenden elektronischen Schalters (T3) um eine halbe Periode der Pulsfrequenz versetzt zur Taktung des in elektrisch positiver Richtung speisenden elektronischen Schalters (T1) erfolgt.

6. Verfahren nach einem der vorhergehenden Ansprüche, **dadurch gekennzeichnet, dass** der speisende elektronische Schalter (T1) und der in Gegenrichtung speisende elektronische Schalter (T3) durch getrennte Zeitgeber (T1/2, T3/4) der Steuereinheit (18, 20) mit unterschiedlichen Zeitbasen gesteuert werden, wobei der jeweils speisende Schalter (T1, T3) und der im gleichen Zweig des Wechselrichters (10) liegende Schalter (T2, T4) von der gleichen Zeitbasis, jedoch von invertierenden Ausgängen der Treiberschaltung (20) gesteuert werden.

7. Verfahren nach einem der vorhergehenden Ansprüche, **dadurch gekennzeichnet, dass** die Abtastung der positiven und der negativen Halbwelle des Messstromes (I_{Sh}) am Shunt (22) zu verschiedenen Zeitpunkten, vorzugsweise in der Taktmitte, entsprechend dem zeitlichen Versatz der Taktung des speisenden und des im Gegentakt geschalteten elektronischen Schalters (T1, T3) erfolgt, und dass der weiter zu verarbeitende korrekte Messwert entsprechend dem Vorzeichen des Sollwertes der Strangspannung (U) bestimmt wird.

8. Verfahren nach einem der vorhergehenden Ansprüche, **dadurch gekennzeichnet, dass** der Wechselrichter (10) mit aktivem Freilauf betrieben wird, wobei der jeweils im gleichen Zweig (T1, T2; T3, T4) der Wechselrichterschaltung liegende Freilaufschalter (T2, T4) in den Stromflusspausen des speisenden elektronischen Schalters (T1, T3) leitend geschaltet wird.

## Claims

1. Method for operating an electric motor which has one or more winding sections, can be commutated electronically and is controlled by pulse-width modulation, on a DC voltage power supply system, having a driver stage (20) for at least one inverter (10), which is constructed using a full-bridge circuit, for feeding field winding (12) of the electric motor, and having a shunt arrangement (22, 24, 26) between the inverter (10) and an earth connection (16) of the DC voltage power supply system for measuring a winding-section current (I), wherein each winding section of the electric motor has only one shunt (22) for current measurement, **characterized in that** a measurement voltage which can be tapped off on the shunt (22) is amplified and is supplied via an analogue/digital converter (26) to a control unit (18, 20), wherein the pulse width at the switches (T3, T1) which are responsible for the pulse-width modulation is kept at a minimum value by the control device (18, 20), which minimum value is sufficient for sampling in the analogue/digital converter (26), and **in that** compensation to the correct value of the excitation of the electric motor is carried out by an opposing current flow through the field winding (12) such that the root mean square value of the winding-section voltage (U) on the field winding (12) is equal to the nominal value of the winding-section voltage (U).

2. Method according to Claim 1, **characterized in that** the minimum value of the pulse width of the winding-section voltage (U) which is produced by the inverter (10) for the field winding (12) is set such that the full value of the measurement voltage, which is proportional to the measurement current (Iₛₕ), is produced on the shunt (22) at the sampling time at the analogue/digital converter (26).

3. Method according to Claim 2, **characterized in that** the pulse width of the winding-section voltage (U) which is produced by the inverter (10) for the field winding (12) is at least 3%, preferably 20%, of the full pulse width at a pulse-width modulation clock frequency of 20 kHz.

4. Method according to one of the preceding claims, **characterized in that** the electronic switch (T3) which feeds in the opposing direction is clocked with a time offset with respect to the clock of the switch (T1), which feeds in the electrically positive direction, in the inverter circuit (T1-T4).

5. Method according to one of the preceding claims, **characterized in that** the electronic switch (T3) which feeds in the opposing direction is clocked with an offset of half the period of the pulse frequency with respect to the clocking of the electronic switch (T1) which feeds in the electrically positive direction.

6. Method according to one of the preceding claims, **characterized in that** the feeding electronic switch (T1) and the electronic switch (T3) which feeds in the opposing direction are controlled by separate timers (T1/2, T3/4) in the control unit (18, 20) with different time bases, wherein the respective feeding switch (T1, T3) and the switch (T2, T4) which is located in the same branch of the inverter (10) are controlled by the same time base, but from inverting outputs of the driver circuit (20).

7. Method according to one of the preceding claims, **characterized in that** the positive and negative half cycles of the measurement current (Iₛₕ) on the shunt (22) are sampled at different times, preferably in the clock-period centre, corresponding to the time offset of the clocking of the feeding electronic switch (T1) and of the electronic switch (T3) which is switched in the opposite sense, and **in that** the correct measured value, to be processed further, is determined corresponding to the mathematical sign of the nominal value of the winding-section voltage (U).

8. Method according to one of the preceding claims, **characterized in that** the inverter (10) is operated with active freewheeling, wherein the respective freewheeling switch (T2, T4) which is located in the same branch (T1, T2; T3, T4) of the inverter circuit is switched on in the current-flow pauses of the feeding electronic switch (T1, T3).

## Revendications

1. Procédé d'utilisation d'un moteur électrique à une ou plusieurs barres, à commutation électronique et commandé par modulation de la largeur d'impulsions dans un réseau à tension continue,
le moteur électrique présentant
un étage pilote (20) pour au moins un onduleur (10) constitué comme circuit en pont plein qui alimente un enroulement d'excitation (12) du moteur électrique et
un ensemble de shunt (22, 24, 26) entre l'onduleur (10) et une borne de masse (16) du réseau à tension continue pour la mesure d'un courant de barre (I), chaque barre du moteur électrique présentant un seul shunt (22) pour la mesure du courant,
**caractérisé en ce que**
une tension de mesure prélevée sur le shunt (22) est amplifiée et apportée par l'intermédiaire d'un convertisseur analogique-numérique (26) à une unité de commande (18, 20),
**en ce que** la largeur des impulsions est maintenue à une valeur minimale par le dispositif de commande (18, 20) sur les commutateurs (T3, T1) responsables de la modulation de la largeur des impulsions, la valeur minimale suffisant pour l'échantillonnage dans le convertisseur analogique-numérique (26) et
**en ce qu'**une compensation à la valeur correcte de l'excitation du moteur électrique s'effectue par alimentation en courant opposé de l'enroulement d'excitation (12) de telle sorte que la valeur effective de la tension de barre (U) de l'enroulement d'excitation (12) soit égale à la valeur de consigne de la tension de barre (U).

2. Procédé selon la revendication 1, **caractérisé en ce que** la valeur minimale de la largeur des impulsions de la tension de barre (U) délivrée par l'onduleur (10) pour l'enroulement d'excitation (12) est ajustée de telle sorte qu'à l'instant d'échantillonnage sur le convertisseur analogique-numérique (26), la pleine valeur de la tension de mesure proportionnelle au courant de mesure (Iₛₕ) soit présente sur le shunt (22).

3. Procédé selon la revendication 2, **caractérisé en ce que** la largeur des impulsions de la tension de barre (U) délivrée par l'onduleur (10) pour le bobinage d'excitation (12) représente au moins 3 % et de préférence 20 % de la pleine largeur des impulsions à une fréquence d'échantillonnage de la modulation de la largeur des impulsions de 20 kHz.

4. Procédé selon l'une des revendications précédentes, **caractérisé en ce que** le cadençage du commutateur électronique (T3) qui assure l'alimentation en sens opposé est décalé temporellement par rapport au cadençage du commutateur (T1) qui assure l'alimentation électrique dans la direction positive du circuit d'onduleur (T1-T4).

5. Procédé selon l'une des revendications précédentes, **caractérisé en ce que** le cadençage du commutateur électronique (T3) qui alimente en sens opposé s'effectue à un décalage d'une demi-période de la fréquence des impulsions par rapport au cadençage du commutateur électronique (T1) qui assure l'alimentation électrique dans le sens positif.

6. Procédé selon l'une des revendications précédentes, **caractérisé en ce que** le commutateur électronique (T1) qui assure l'alimentation et le commutateur électronique (T3) qui assure l'alimentation en sens opposé sont commandés selon des bases temporelles différentes par des horloges (T1/2, T3/4) de l'unité de commande (18, 20), le commutateur (T1, T3) assurant l'alimentation et le commutateur (T2, T4) situé sur la même branche de l'onduleur (10) étant commandés par la même base temporelle mais par les sorties inversantes du circuit pilote (20).

7. Procédé selon l'une des revendications précédentes, **caractérisé en ce que** l'échantillonnage des demi-ondulations positives et des demi-ondulations négatives du courant de mesure (Iₛₕ) sur le shunt (22) s'effectue à différents instants, de préférence au milieu de la cadence et en correspondance au décalage temporel du cadençage du commutateur électronique (T1) assurant l'alimentation et du cadençage du commutateur électronique (T3) raccordé en contre-cadence, et **en ce que** la valeur correcte restant à traiter est déterminée en fonction du signe de la valeur de consigne de la tension de barre (U).

8. Procédé selon l'une des revendications précédentes, **caractérisé en ce que** l'onduleur (10) est alimenté en fonctionnement libre actif, le commutateur en fonctionnement libre (T2, T4) situé dans la même branche (T1, T2; T3, T4) du circuit d'onduleur étant commuté en conduction lors des pauses de passage de courant du commutateur électronique (T1, T3) assurant l'alimentation.
